# EUROPEAN PATENT APPLICATION

(11) **EP 4 626 120 A1**
(43) Date of publication of application: **01.10.2025**
(21) Application number: 24744905.1
(22) Date of filing: 18.01.2024
(51) Int. Cl.: H04W 72/51, H04W 72/25, H04W 4/40, H04W 76/14, B64C 39/02, H04W 84/06, H04W 92/18, B64U 101/00

(54) **METHOD AND DEVICE FOR TRANSMISSION RESOURCE SELECTION IN WIRELESS DIRECT COMMUNICATION SYSTEM SUPPORTING UNMANNED AERIAL VEHICLE**

(30) Priority: 18.01.2023 KR 20230007584
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); JUNG, Sangyeob, Suwon-si, Gyeonggi-do 16677 (KR)
(74) Representative: Nederlandsch Octrooibureau
(86) International application number: PCT/KR2024/000907
(87) International publication number: WO 2024/155126

(57) **Abstract**

The disclosure relates to a 5G or 6G communication system for supporting a higher data transmission rate. According to an embodiment of the present disclosure, safe drone communication or urban air mobility communication can be provided by increasing efficiency of transmission resource use and reducing interference in a wireless communication system.

## Description

### [Technical Field]

The disclosure relates to a wireless communication system and, more particularly, to a method and a device for performing location-based transmission resource selection by an unmanned aerial vehicle UE in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, the need for a method of providing safe drone communication or urban air mobility communication has emerged.

### [Disclosure]

### [Technical Problem]

An object of the disclosure is to provide a device and method capable of providing a service in a wireless communication system.

### [Technical Solution]

A method performed by a terminal in a wireless communication system according to an embodiment of the disclosure may include identifying first zone configuration information associated with communication performed between terminals, the first zone configuration information including at least one of height information or velocity information of at least one zone, determining a zone identifier corresponding to the terminal, based on the first zone configuration information and location information of the terminal, identifying transmission resource pool information corresponding to the zone identifier, based on the determined zone identifier, and allocating transmission resources for transmitting a message associated with the communication performed between the terminals, based on the identified transmission resource pool information.

A method performed by a base station in a wireless communication system according to another embodiment of the disclosure may include generating first zone configuration information associated with communication performed between terminals, the first zone configuration information including at least one of height information or velocity information of at least one zone and transmitting a message including the generated first zone configuration information to a terminal supporting the communication performed between the terminals, wherein the first zone configuration information is used to determine a zone identifier corresponding to the terminal by the terminal.

A terminal according to another embodiment of the disclosure may include a transceiver; and a controller configured to perform control to identify first zone configuration information associated with communication performed between terminals, the first zone configuration information including at least one of height information or velocity information of at least one zone, determine a zone identifier corresponding to the terminal, based on the first zone configuration information and location information of the terminal, identify transmission resource pool information corresponding to the zone identifier, based on the determined zone identifier, and allocate transmission resources for transmitting a message associated with the communication performed between the terminals, based on the identified transmission resource pool information.

A base station according to another embodiment of the disclosure may include a transceiver and a controller configured to perform control to generate first zone configuration information associated with communication performed between terminals, the first zone configuration information including at least one of height information or velocity information of at least one zone and transmit, through the transceiver, a message including the generated first zone configuration information to a terminal supporting the communication performed between the terminals, wherein the first zone configuration information is used to determine a zone identifier corresponding to the terminal by the terminal.

### [Advantageous Effects]

According to an embodiment of the disclosure, it is possible to provide safe drone communication or urban air mobility communication by increasing the efficiency of the use of transmission resources and reducing interference in a wireless communication system.

The effects that can be realized by the disclosure are not limited to the above-described effects, and other effects that have not been mentioned may be clearly understood by those skilled in the art from the following description.

### [Description of Drawings]

FIG. 1 is a diagram illustrating a scenario of supporting an unmanned vehicle service message in a wireless communication system according to an embodiment of the disclosure.
FIG. 2 is a diagram illustrating a scenario of supporting an unmanned vehicle service message in a wireless communication system according to an embodiment of the disclosure.
FIG. 3 is a diagram illustrating a configuration of zones in a scenario of supporting an unmanned vehicle in a wireless communication system according to an embodiment of the disclosure.
FIG. 4 is a diagram illustrating a configuration of zones in a scenario of supporting an unmanned vehicle in a wireless communication system according to an embodiment of the disclosure.
FIG. 5 is a diagram illustrating an operation of the UE in a scenario of supporting an unmanned vehicle in a wireless communication system according to an embodiment of the disclosure.
FIG. 6 is a diagram illustrating an operation of the UE in a scenario of supporting an unmanned vehicle in a wireless communication system according to an embodiment of the disclosure.
FIG. 7 is a block diagram illustrating a structure of the UE according to an embodiment of the disclosure.

### [Mode for Disclosure]

Direct communication between user equipments (UEs) (sidelink communication) using a 5G communication system is being researched, and the direct communication between UEs may be applied to, for example, vehicle communication (vehicle-to-everything (V2X)), a safety network (public safety network), and drone communication and is expected to provide users with various services.

An embodiment of the disclosure is to provide a method and device for allocating transmission resources to transmit a service message of an unmanned aerial vehicle in a wireless communication system supporting the unmanned aerial vehicle.

The technical subjects pursued in the disclosure may not be limited to the above mentioned technical subjects, and other technical subjects which are not mentioned may be clearly understood, through the following descriptions, by those skilled in the art of the disclosure.

According to an embodiment of the disclosure, it is possible to provide safe drone communication or urban air mobility communication by increasing efficiency of the use of transmission resources and reducing interference in a wireless communication system.

Hereinafter, exemplary embodiments of the disclosure are described in detail with reference to the accompanying drawings. It is noted that the same reference numeral is designated to the same component in the accompanying drawings as soon as possible. Further, a detailed description of the known function and configuration that may make the subject of the disclosure unclear will be omitted.

In describing embodiments of the disclosure, a description will be omitted of the technical content that is well known in the technical field, to which the disclosure pertains, and is not directly related to the disclosure. This is to make the subject of the disclosure more clear without ambiguity thereof by omitting an unnecessary description.

For a similar reason, some components are exaggerated, omitted, or schematically illustrated in the accompanying drawings. Further, the size of each component does not totally reflect the actual size. The same reference numeral is assigned to the same or corresponding component in each drawing.

Advantages and features of the disclosure and methods of achieving the same will become clear with reference to the accompanying drawings and embodiments described below in detail. However, the disclosure is not limited to the following embodiments and may be implemented in various different forms, and the embodiments of the disclosure are provided to make the disclosure perfect and completely inform those skilled in the art of the scope of the disclosure and the disclosure is only defined by the scope of the claims. Through the specification, the same reference numeral refers to the same component.

It will be understood that each block of the flowchart illustrations and combinations of the flowchart illustrations can be implemented by computer program instructions. These computer program instructions may be loaded onto a general-purpose computer, special-purpose computer, or processor of other programmable data-processing apparatuses, such that the instructions which execute on the computer or the processor of other programmable data-processing apparatuses create a means for implementing the functions specified in the flowchart block(s). These computer program instructions may also be stored in a computer-available or computer-readable memory that can direct a computer or other programmable data-processing apparatuses to implement a function in a particular manner so that the instructions stored in the computer-available or computer-readable memory produce an article of manufacture including instructions for implementing the function specified in the flowchart block(s). The computer program instructions may also be loaded onto a computer or other programmable data-processing apparatus to cause a series of operational steps to be performed on the computer or other programmable data-processing apparatus to produce a computer-implemented process such that the instructions executed on the computer or other programmable data-processing apparatus provide steps for implementing the functions specified in the flowchart block(s).

In this regard, each block may represent a portion of a module, segment, or code including one or more executable instructions for implementing the specified logical function(s). It should also be noted that, in some alternative implementations, the functions noted in the blocks may occur out of the order. For example, two successive blocks may be simultaneously performed substantially or may be performed in a reverse order according to the corresponding functions sometimes.

At this time, the term "unit" (or "~er") used in the present embodiment refers to software or a hardware component such as an FPGA or an ASIC and plays any role. However, the "unit" (or "~er") is not limited to software or hardware. The "unit" (or "~er") may be configured to be present in an addressable storage medium, and may also be configured to run on one or more processors. Accordingly, for example, the "unit" (or "~er") includes software components, object-oriented software components, components such as class components and task components, processors, functions, attributes, procedures, subroutines, segments of program code, drivers, firmware, microcode, circuits, data, databases, data structures, tables, arrays, and parameters. Functions provided in the components and the "unit" (or "~er") may be combined into a smaller number of components and the units" (or "~ers") or divided into a larger number of components and "units" (or "~ers"). In addition, the components and the units" (or "~ers") may be implemented to run on one or more CPUs in a device or secure multimedia card.

The detailed description of embodiments of the disclosure is made mainly on the basis of new radio (NR) which is a radio access network and a packet core (a 5G system, a 5G core network, or a next generation (NG) core) which is a core network on the 5^{th}-generation (5G) mobile communication standard specified by the 3GPP corresponding to a mobile communication standardization organization, but the main subject of the disclosure can be applied to other communication systems having a similar technical background with slight modification without departing from the scope of the disclosure, which can be determined by those skilled in the art.

In the 5G system, a network data collection and analysis function (NWDAF) that is a network function for analyzing and providing data collected by a 5G network may be defined to support network automation. The NWDAF may collect information from the 5G network, store and analyze the information, and provide the result to an unspecified network function (NF), and the analysis result may be independently used by each NF.

For convenience of the following description, some of the terms and names defined in the 3^{rd} generation partnership project (3GPP) standard (standard of 5G, NR, LTE, or a system similar thereto) may be used. However, the disclosure is not limited by the terms and names of the disclosure, and may be equally applied to systems following other standards.

Terms referring to a signal used in the following description, terms referring to a channel, terms referring to control information, terms referring to network entities, and terms referring to components of a device are used only for convenience of description. Accordingly, the disclosure is not limited to the terms used in the disclosure, and other terms referring to a target having the equivalent technical meaning may be used.

Hereinafter, a base station is an entity that allocates resources to a user equipment (UE) and may be one of an eNode B, a Node B, a base station (BS), a radio access unit, a base station controller, and a node on a network. The UE may include a user equipment (UE), a mobile station (MS), a cellular phone, a smart phone, a computer, or a multimedia system capable of performing a communication function. However, it is only an example, and the UE is not limited to the example. In the disclosure, an eNB may be interchangeably used with a gNB for convenience of description. That is, a BS described as an eNB may indicate a gNB. In the disclosure, the UE may indicate not only a mobile phone, NB-IoT devices, or sensors, but also various wireless communication devices.

In the following description, the terms "physical channel" and "signal" may be interchangeably used with "data" or "control signal." For example, "physical downlink shared channel (PDSCH)" is a term referring to a physical channel for transmitting data, but may be used to refer to data. That is, in the disclosure, the expression "transmit a physical channel" may be interpreted to be the same as the expression "transmit data or a signal through a physical channel."

In the disclosure, "higher-layer signaling" refers to a method of transmitting a signal from a BS to a UE through a downlink data channel of a physical layer or from a UE to a BS through an uplink data channel of a physical layer. Higher-layer signaling may be understood as radio resource control (RRC) signaling or a media access control (MAC) control element (CE).

In the disclosure, the expressions larger than or smaller than are used to determine whether a specific condition is satisfied or fulfilled, but are used only to indicate an example, and do not exclude the following description. A condition indicating "larger than or equal to" may be replaced with "larger than", a condition indicating "equal to or smaller than" may be replaced with "smaller than", a condition indicating "larger than or equal to and smaller than" may be replaced with "larger than and equal to or smaller than."

Further, the disclosure describes embodiments using the terms used in some communication standards (for example, 3^{rd}-generation partnership project (3GPP)), but this is only an example. Embodiments of the disclosure may be easily modified and applied to other communication systems.

Direct communication between UEs (sidelink communication) using a 5G communication system is being researched, and the direct communication between UEs may be applied to, for example, vehicle communication (vehicle-to-everything (V2X)), a safety network (public safety network), and drone communication and is expected to provide users with various services.

An embodiment of the disclosure is to provide a method and device for supporting transmission resource allocation to transmit a service message of an unmanned aerial vehicle in a wireless communication system supporting the unmanned aerial vehicle. The service message of the unmanned aerial vehicle may include, for example, at least one or a combination of information for identifying an unmanned aerial vehicle and information for controlling an unmanned aerial vehicle.

According to an embodiment of the disclosure, it is possible to provide safe drone communication and urban air mobility communication by efficiently using transmission resources and reducing interference of the use of transmission resources in a wireless communication system.

The disclosure may provide a method and device for using a direct communication interface between UEs (for example, PC5 or sidelink) in order to control unmanned aerial vehicles (for example, drone or unmanned aerial vehicle (UAV)) or control aerial vehicles (for example, urban air mobility (UAM)) with no pilots or limited involvement of pilots in a wireless communication system. In the disclosure, a scenario using the direct communication interface between UEs may include a procedure of acquiring UAV identification information or UAM identification information of unmanned aerial vehicles or urban air mobility by an agency that regulates unmanned aerial vehicles or urban air mobility (for example, an agency in charge of law enforcement such as the U.S. Federal Aviation Administration). According to the regulatory policy, the UE mounted on the unmanned aerial vehicle may transmit UAV identification information to a UE managed by the regulatory agency.

According to an embodiment, the UE may transmit UAV identification information or UAM identification information through the direct communication interface between UEs. In the disclosure, in addition to messages including the UAV identification information or the UAM identification information, messages including information required for controlling unmanned aerial vehicles or urban air mobility may be defined as UAV control messages. Of course, the disclosure is not limited to the example, and the UAV control messages may further include various messages.

The UE mounted on the unmanned aerial vehicle, the UE mounted on the urban air mobility, or the UE managed by the regulatory agency (law enforcement) may transmit, receive, and process a UAV control message including control information required through the direct communication interface between UEs. Examples of a scenario of using the UAV control message which can be operated according to various embodiments of the disclosure may include the UE identifier broadcast control and collision detection, and the collision avoidance control as shown in [Table 1] below.

**[Table 1]**

| |
|---|
| • Use of U2X (UAV to everything) for BRID (broadcast remote identification): |
| • the content of the messages for BRID are defined according to the regional regulations for BRID (e.g., message set of ASTM F3411.19 or ASD-STAN prEN 4709-002 P1 ) and optionally according to regional mean of compliance documents. |
| • Use of U2X (UAV to everything) for DAA (detect and avoid): |
| • the content of the messages for DAA are defined according to the regional regulations for DAA and is out of scope of this specification. |

According to various embodiments of the disclosure, the UAV control message may include remote UE identification (used when a UE identifier of the unmanned vehicle is remotely transmitted), a remote UE identification request (used when a request for transmitting a UE identifier of the unmanned vehicle is remotely made), remote UE positioning information (used when location information of unmanned vehicle is remotely transmitted), a remote UE positioning request (used when a request for location information of unmanned vehicle is remotely made), remote UE path information (used when a movement path of unmanned vehicle is remotely transmitted), a remote UE path request (used when a request for a movement path of unmanned vehicle is remotely made), and detect and avoid (DAA) control (used to inform that collision of unmanned vehicle is detected or indicate to avoid collision), and may be transmitted through a PC5 interface.

Unmanned vehicles used in the disclosure may include all of unmanned aerial vehicles and urban air mobility. Of course, the unmanned vehicles are not limited to the examples, and may include all types of vehicles in which no person is on board as well as unmanned aerial vehicles and urban air mobility.

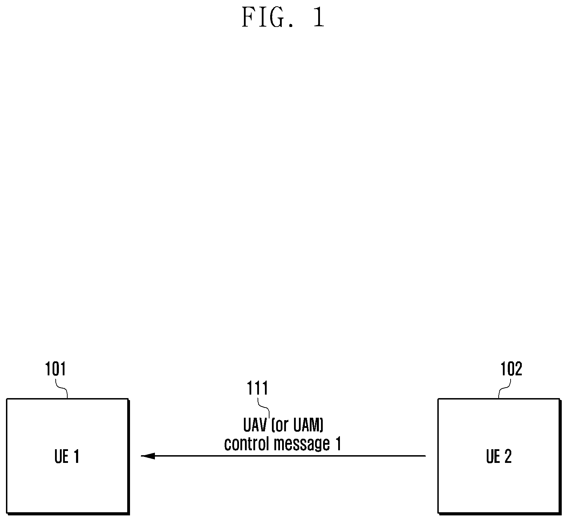

FIG. 1 is a diagram illustrating a scenario of supporting an unmanned vehicle service message in a wireless communication system according to an embodiment of the disclosure.

Referring to FIG. 1, UE 1 101 and UE 2 102 may be UEs in a wireless communication system supporting an unmanned vehicle. For example, UE 1 101 may be a UE managed by an agency that regulates an unmanned vehicle. UE 2 102 may be a UE mounted on unmanned vehicle. In another example, UE 1 101 and UE 2 102 may correspond to UEs mounted on unmanned vehicles. UE 2 102 may broadcast (groupcast or unidirectionally unicast) UAV control message 1 or UAM control message 1 111 to UE 1 101 through a direct communication interface (for example, PC5 or sidelink). Based on FIG. 1, an example of a scenario in which UE 1 101 and UE 2 102 transmit and receive unmanned vehicle control signaling is described below. UE 2 102 may transmit its own identification information to UE 1 101 by using the direct communication interface (for example, PC5 or sidelink) in order to identify information on a moving unmanned vehicle (authentication information, user registration information, or the like). UE 1 101 may be a UE (for example, a UE managed by an agency that regulates an unmanned vehicle) that manages an unmanned vehicle. UE 2 102 may be a UE mounted on an unmanned vehicle. For example, identification information of UE 2 102 may be transmitted while being included in UAV control message 1 or UAM control message 1 111.

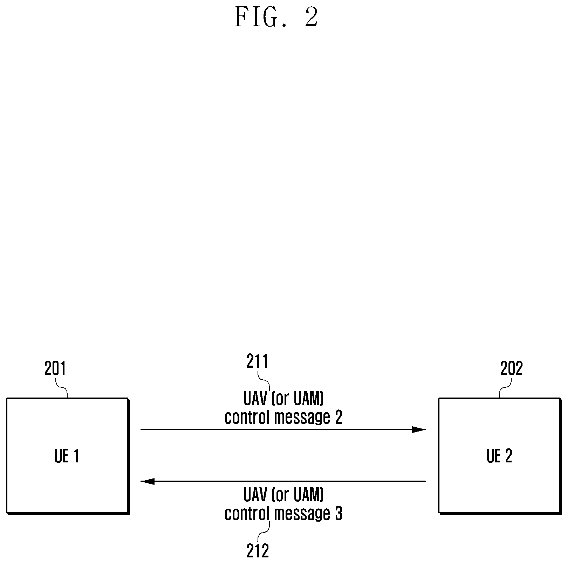

FIG. 2 is a diagram illustrating a scenario of supporting an unmanned vehicle service message in a wireless communication system according to an embodiment of the disclosure.

Referring to FIG. 2, UE 1 201 and UE 2 202 may be UEs in a wireless communication system supporting an unmanned vehicle. According to an embodiment, UE 1 201 may correspond to a UE managed by an agency that regulates unmanned vehicle. UE 2 202 may correspond to a UE mounted on the unmanned vehicle. According to another embodiment, UE 1 201 and UE 2 202 may correspond to UEs mounted on the unmanned vehicle.

According to an embodiment of the disclosure, UE 1 201 and UE 2 202 may broadcast (groupcast or unidirectionally/bidirectionally unicast) a UAV control message through a direct communication interface (for example, PC5 or sidelink).

Based on FIG. 2, an example of a scenario in which UE 1 201 and UE 2 202 transmit and receive unmanned vehicle control signaling is described below. UE 1 201 managed by an agency that regulates an unmanned vehicle may transmit UAV control message 2 211 making a request for transmitting identification information to UE 2 202 mounted on the unmanned vehicle by using the direct communication interface (for example, PC5 or sidelink) in order to identify information on the unmanned vehicle (authentication information, user registration information, or the like) operated by the agency that regulates the unmanned vehicle. UE 2 202 may transmit UAV control message 3 212 including its own identification information to UE 1 201 by using the direct communication interface.

Similar to this, at least one or a combination of UAV control message 2 211 and UAV control message 3 212 may be transmitted and received to make a request for stopping flight between UE 1 201 and UE 2 202 or provide information on an allowed flight segment.

When both UE 1 and UE 2 are UEs mounted on unmanned vehicles according to the embodiments of FIGs. 1 and 2, the UAV control messages transmitted and received by UE 1 and UE 2 may correspond to signaling including a movement path, a location (for example, 3D location information), and the like of the UE or signaling of making the direct communication connection to exchange messages including a movement path, a location (for example, 3D location information), and the like of the UE and establishing a direct communication connection session.

When UE 1 and UE 2 transmit and receive the UAV control messages through the direct communication interface (for example, PC5 or sidelink) according to the embodiments of FIGs. 1 and 2, each of UE1 and UE 2 may acquire configuration information for a transmission resource pool for transmitting the UAV control message and a reception resource pool for receiving the same. The UE transmitting the UAV control message may directly allocate resources in the transmission resource pool configured for UAV control message transmission. The operation in which the UE directly allocates resources may include a scheme of sensing the transmission resource pool to select resources. The UE may transmit the UAV control message by using the allocated resources.

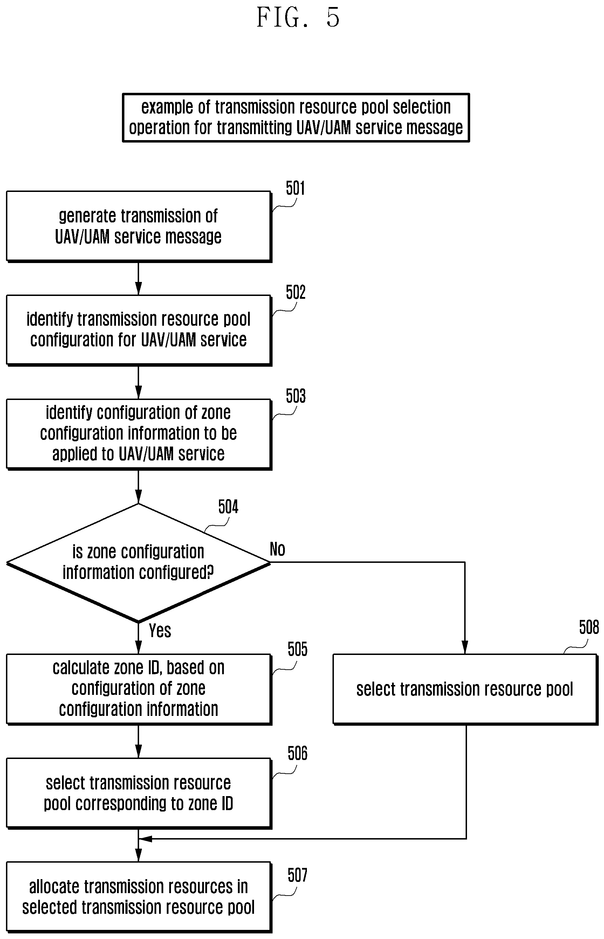

When the UE directly allocates resources for transmitting the UAV control message through the PC5 interface, selection of the transmission resource pool configured for the UAV control message may be determined based on a zone identifier calculated based on its own location information. In order to determine whether the UE is able to select the transmission resource pool, based on the zone identifier calculated based on location information, the UE may use a zone configuration. Zone configuration information may be received from a base station through a system information message (SIB) or a RRC message or may be pre-configured in the UE. The zone configuration information may include information in [Table 2] or [Table 3] below. The zone configuration information in [Table 2] may be used to calculate the zone identifier by the UE, based on longitude and latitude, and the zone configuration information in [Table 3] may be used to calculate the zone identifier by the UE, based on longitude, latitude, and altitude. Whether the UE uses the zone configuration information in [Table 2] or the zone configuration information in [Table 3] may be determined based on at least one or a combination of indication information of the base station, information authenticated to allow the UE to perform U2X communication (direct communication using a UAV service message or a UAM service message through the PC5 interface), a location condition of the UE, and a mobility condition of the UE. The UE operation of calculating the zone identifier by using the zone configurations in [Table 2] and [Table 3] is described in detail with reference to FIGs. 5 to 6. Zone configuration parameter values in [Table 2] and [Table 2] may be determined by the base station or an entity that controls and manages the zone configurations in consideration of the number of transmission resource pools which can be used for U2X communication. The zone configuration information in [Table 2] and [Table 3] may be acquired from the system information message (SIB), the RRC message, or information pre-configured in the UE. When the zone configuration parameter in [Table 2] is used, the zone identifier may be calculated based on location information of the UE corresponding to longitude and latitude, and the transmission resource pool which can be used for U2X communication may be selected based on the derived zone identifier. When the zone configuration parameter in [Table 3] is used, the zone identifier may be calculated based on location information of the UE corresponding to longitude, latitude and altitude, and the transmission resource pool which can be used for U2X communication may be selected based on the derived zone identifier. When the zone configuration parameter in [Table 2] is used, the probability of interference and congestion increases if UEs at similar locations in terms of longitude and latitude derive the same zone identifier and use the same transmission resource pool. In order to avoid the interference and congestion, the zone identifier may be derived by additionally considering the altitude aspect like the zone configuration parameter in [Table 3], and the transmission resource pool configuration parameters may be managed to make UEs use different transmission resource pools. The zone configuration parameter value may be differently configured in the case where it is used for U2X communication and the case where it is used for V2X communication (direct communication using a V2X service message through the PC5 interface). By differently configuring the zone configuration parameter value, it is possible to minimize interference between a UE performing V2X communication and a UE performing U2X communication or interference between UEs performing U2X communication and to acquire an effect of increasing the efficiency of resources used for direct communication through the PC5 interface.

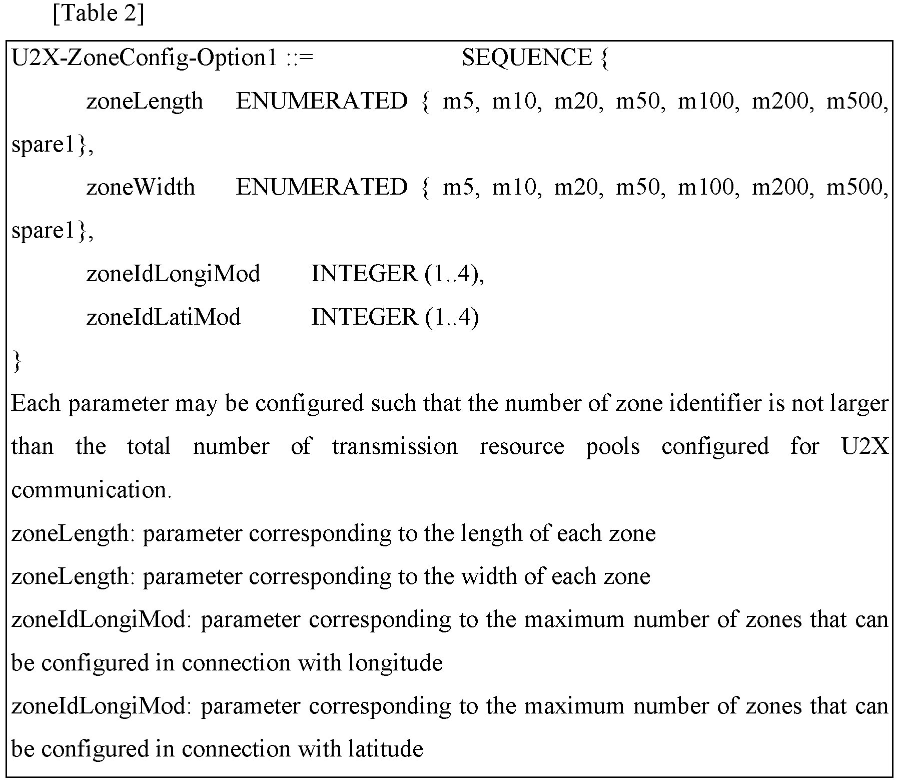

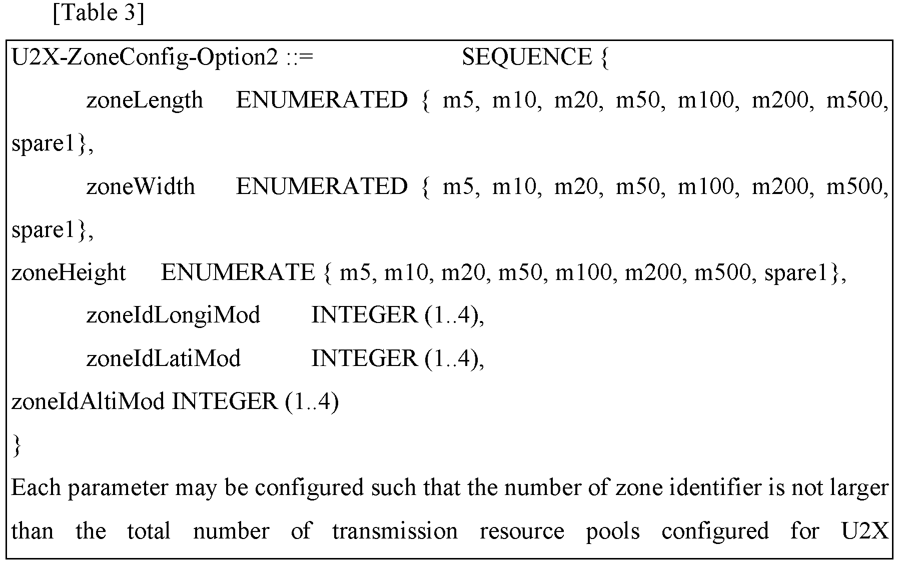

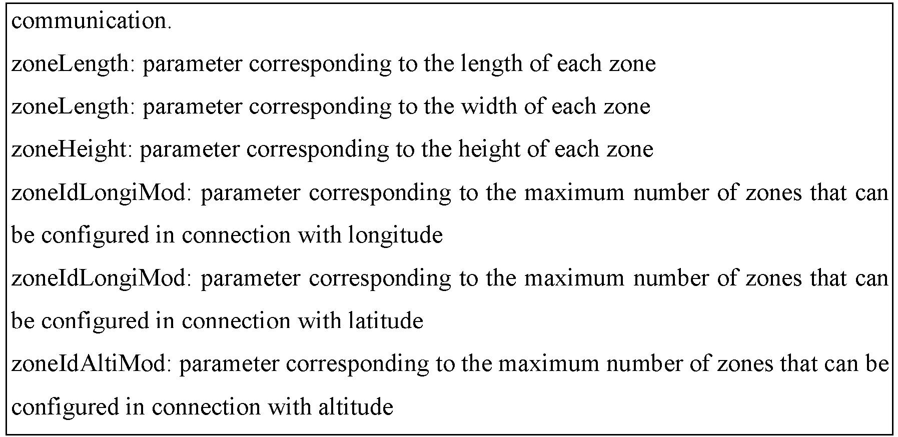

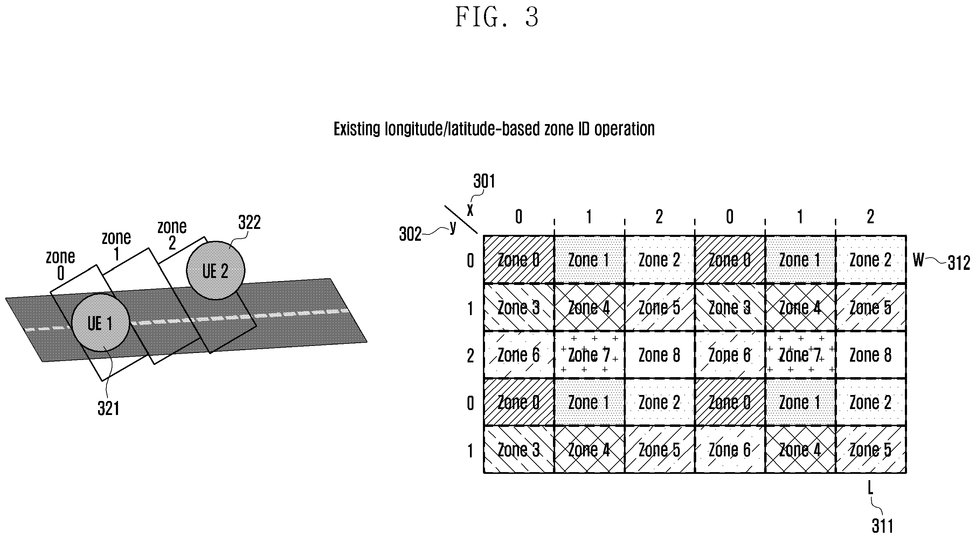

FIG. 3 is a diagram illustrating a configuration of zones in a scenario of supporting an unmanned vehicle in a wireless communication system according to an embodiment of the disclosure.

Referring to FIG. 3, UE 1 321 and UE 2 322 may be UEs in a wireless communication system supporting an unmanned vehicle. Zones in FIG. 3 may be configured using the zone configuration information in [Table 2]. x 301 indicates the longitude side of the zone, and y 302 indicates the latitude side of the zone. A parameter L 311 indicating the zone length and a parameter W 312 indicating the zone width correspond to zoneLength and zoneWidth of the zone configuration information in [Table 2]. UE 1 321 and UE 2 322 may calculate a zone identifier, based on the zone configuration information in [Table 2], and their own longitude side location and latitude side location. An example of an equation for calculating a zone identifier by UE 1 321 and UE 2 322 using the zone configuration information in [Table 2] is as shown in [Table 4] below.

**[Table 4]**

| |
|---|
| x₁= FLOOR (x / L) Mod Nx |
| y₁= FLOOR (y / W) Mod Ny |
| Zone_id =y₁ * Nx + x₁ |
| L is the value of zoneLength included in zoneConfig in [Table 2]; |
| W is the value of zoneWidth included in zoneConfig in [Table 2]; |
| Nx is the value of zoneIdLongiMod included in zoneConfig in [Table 2]; |
| Ny is the value of zoneIdLatiMod included in zoneConfig in [Table 2]; |
| x is the geodesic distance in longitude between UE's current location and geographical coordinates (0, 0) according to WGS84 model and it is expressed in meters; |
| y is the geodesic distance in latitude between UE's current location and geographical coordinates (0, 0) according to WGS84 model and it is expressed in meters. |

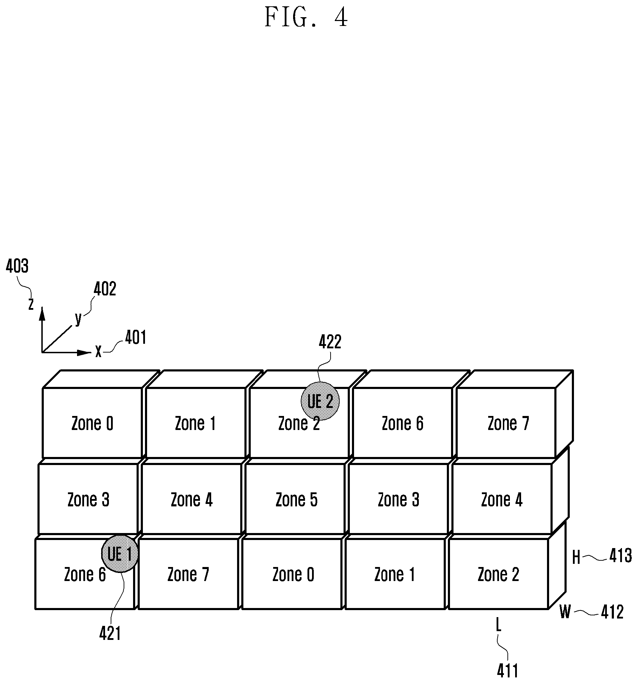

FIG. 4 is a diagram illustrating a configuration of zones in a scenario of supporting an unmanned vehicle in a wireless communication system according to an embodiment of the disclosure.

Referring to FIG. 4, UE 1 421 and UE 2 422 may be UEs in a wireless communication system supporting an unmanned vehicle. Zones in FIG. 4 may be configured using the zone configuration information in [Table 3]. x 401 may indicate the longitude side of the zone, y 402 may indicate the latitude side of the zone, and z 403 may indicate the altitude side of the zone. A parameter L 411 indicating the zone length, a parameter W 412 indicating the zone width, and a parameter H 413 indicating the zone height may correspond to zoneLength, zoneWidth, and zoneHeight of the zone configuration information in [Table 3], respectively. UE 1 421 and UE 2 422 may calculate a zone identifier, based on the zone configuration information in [Table 3] and their own longitude side location, latitude side location, and altitude side location. An example of an equation for calculating a zone identifier by UE 1 421 and UE 2 422 using the zone configuration information in [Table 3] is described in [Table 5] below. According to an embodiment, a parameter of the altitude side may be reflected in the equation as a variable as shown in [Table 5]. For example, it is possible to finally derive the zone identifier by additionally applying the parameter of the altitude side to the zone identifier derived from the equation of the longitude and latitude size shown in [Table 4]. In order to derive the zone identifier, a modulation (mode) operation may be applied to the parameter of the altitude side with respect to the zone identifier derived from the equation of [Table 4]. In addition to the mod operation, other methods of calculating the zone identifier in consideration of the altitude information by the UE are not excluded.

**[Table 5]**

| |
|---|
| x₁= FLOOR (x / L) Mod Nx |
| y₁= FLOOR (y / W) Mod Ny |
| z₁= FLOOR (z / H) Mod Nz |
| Zone_id = z₁ * N_{y} + y₁ * Nx + x₁ |
| L is the value of zoneLength included in zoneConfig in [Table 3]; |
| W is the value of zoneWidth included in zoneConfig in [Table 3]; |
| H is the value of zoneHeight included in zoneConfig in [Table 3]; |
| Nx is the value of zoneIdLongiMod included in zoneConfig in [Table 3]; |
| Ny is the value of zoneIdLatiMod included in zoneConfig in [Table 3]; |
| Nz is the value of zoneIdAltiMod included in zoneConfig in [Table 3]; |
| x is the geodesic distance in longitude between UE's current location and geographical coordinates (0, 0) according to WGS84 model and it is expressed in meters; |
| y is the geodesic distance in latitude between UE's current location and geographical coordinates (0, 0) according to WGS84 model and it is expressed in meters; |
| z is the geodesic distance in altitude between UE's current location and sea level (0 meter) and it is expressed in meters; (the use of sea level is considered as a reference example of altitude measurement, but other methods are not excluded) |

It has been described, as an example, that the UE considers longitude, latitude, and altitude to calculate the zone identifier when the transmission resource pool configured for the dedicated U2X communication is selected based on the zone configuration information and the UE location information in the embodiments of FIGs. 3 and 4, but other information associated with the UE location also can be considered. Other information associated with the UE location may include, for example, a UE velocity (also indicated as a horizontal velocity or a vertical velocity).

FIG. 5 is a diagram illustrating an operation of the UE in a scenario of supporting an unmanned vehicle in a wireless communication system according to an embodiment of the disclosure.

Referring to FIG. 5, the UE may determine that a UAV or UAM service message to be transmitted from a higher layer of the UE is transferred to a lower layer (a layer selecting transmission resources, for example, the MAC layer) in step 501. The UE may determine whether transmission resources to transmit the UAV or UAM service message have been already allocated or transmission resources should be allocated. When the UE determines a need to allocate transmission resources, transmission resource pool configuration information for a UAV or UAM service may be identified in step 502. When it is determined that the transmission resources to transmit the UAV or UAM service message have been already allocated and the allocated resources can be used, the UE may transmit the UAV or UAM service message by using the determined resources. The UE may identify the transmission resource pool configuration information for the UAV or UAM service and identify zone configuration information to be applied to the UAV/UAM service in step 503. The zone configuration information that the UE identifies in step 503 may include the information described in [Table 2] to [Table 3]. The UE may determine whether the zone configuration information to be applied to the UAV/UAM service is configured in step 504. When it is determined that the zone configuration information to be applied to the UAV/UAM service is configured according to the determination result of step 504, the UE may calculate a zone identifier, based on the zone configuration information and its own location information in step 505. In step 505, the UE may calculate the zone identifier by using the equation in [Table 4] corresponding to [Table 2] or calculate its own zone identifier by using the equation in [Table 5] corresponding to [Table 3]. The UE may select a transmission resource pool corresponding to the zone identifier calculated in step 505. According to an embodiment, the transmission resource pool information of step 505 may correspond to the transmission resource pool for the UAV/UAM service acquired in step 502.

In step 506, the UE may select the transmission resource pool corresponding to the zone identifier. Further, in step 507, the UE may allocate transmission resources in the selected transmission resource pool. For example, in step 507, the UE may select transmission resources to transmit the UAV/UAM service message generated in step 501 in the transmission resource pool selected in step 506. The operation of selecting the transmission resources in step 507 may include an operation of allocating resources to be used for transmitting the message through sensing of the resource pool.

Meanwhile, when it is identified that zone configuration information for transmitting the UAV/UAM service message is not configured according to the determination of step 504, the UE may proceed to step 508. In step 508, the UE may perform the transmission resource pool selection operation that is not based on the zone. In step 507, the UE may allocate transmission resources in the selected transmission resource pool. As the transmission resource pool selection operation that is not based on the zone, for example, a method of randomly selecting one of transmission resource pools for the UAV/UAM service acquired in step 502, selecting one of transmission resource pools having the lowest congestion, or selecting one of transmission resource pools having congestion lower than a threshold may be used. Even in the case of the transmission resource pool selection that is not based on the zone, the UE may perform the operation of allocating resources to be used for transmitting the UAV/UAM service message by sensing the selected transmission resource pool.

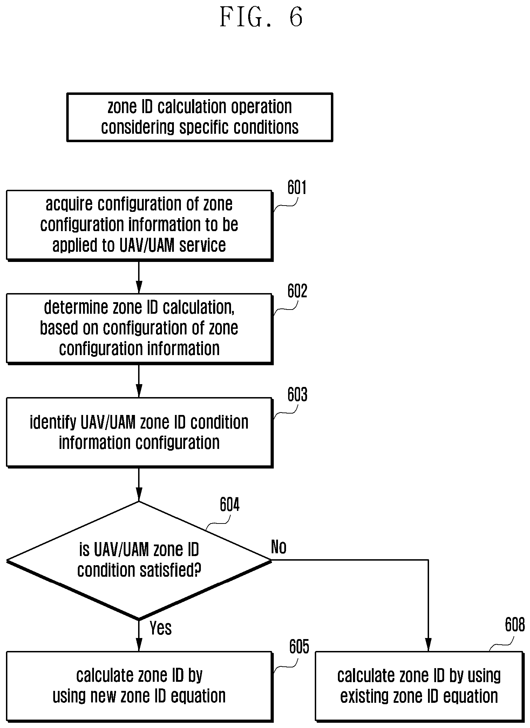

FIG. 6 is a diagram illustrating an operation of the UE in a scenario of supporting an unmanned vehicle in a wireless communication system according to an embodiment of the disclosure.

FIG. 6 illustrates an example of an operation in which the UE determines whether to select a resource pool to transmit the UAV/UAM service message by using [Table 2] and [Table 4] or select a resource pool to transmit the UAV/UAM service message by using [Table 3] and [Table 5].

Conditions for selecting the resource pool to transmit the UAV/UAM service message by using [Table 3] and [Table 5] by the UE may include, for example, [Table 6] below. In the case where the UE performs the zone-based transmission resource pool selection operation, one or a combination of conditions in [Table 6] can be operated.

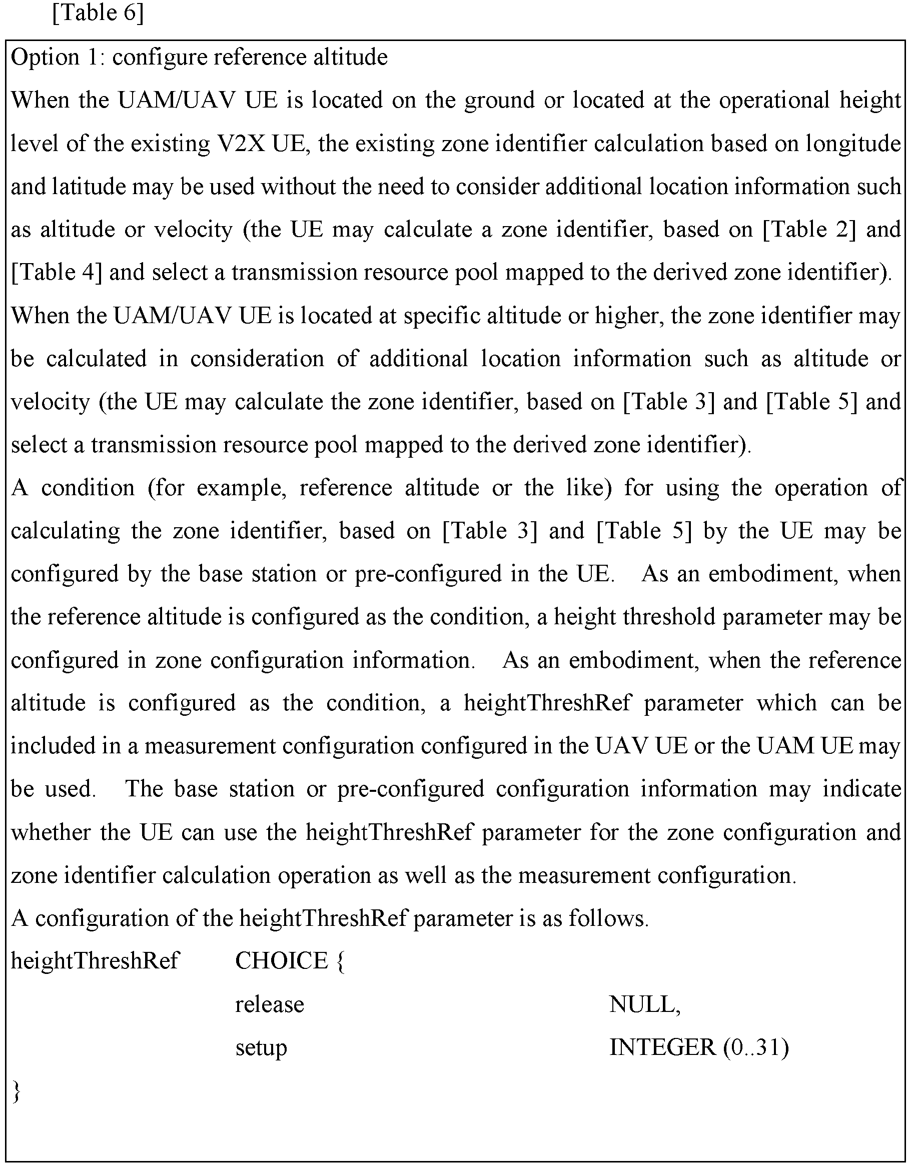

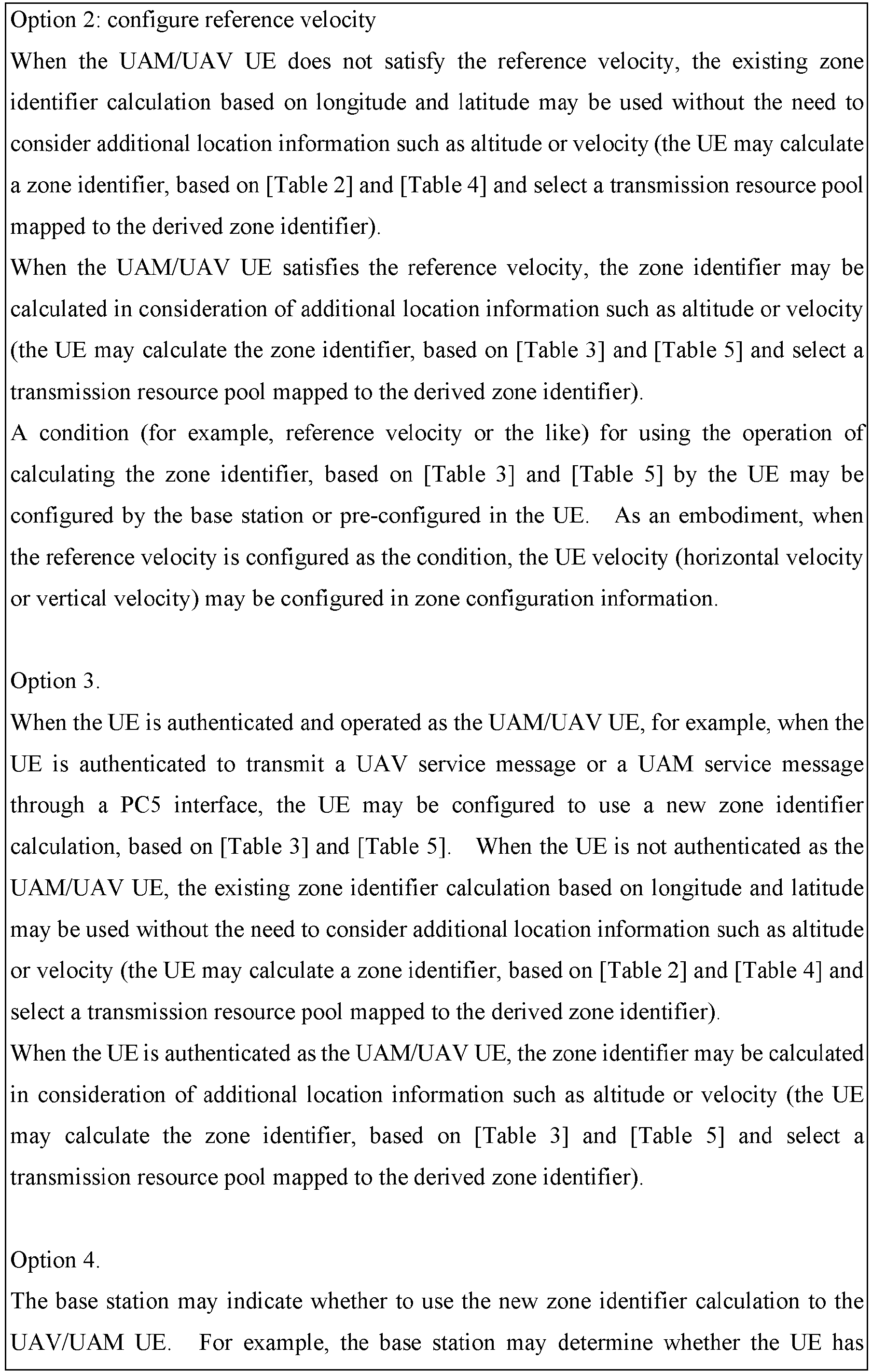

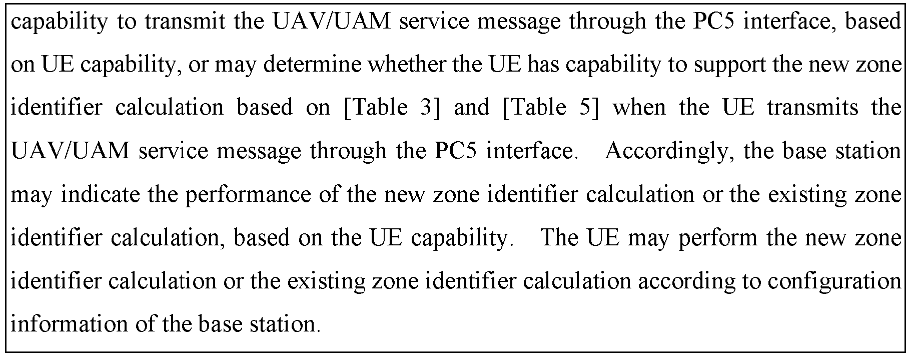

Referring to FIG. 6, when the UE should transmit the UAV service message or the UAM service message, the UE may acquire a resource pool configuration and zone configuration information to be applied to the UAV/UAM service in step 601. The configuration information of step 601 may include the information in [Table 2] and [Table 3]. The UE may determine whether the zone identifier can be calculated based on the zone configuration information in step 602.

In step 603, the UE may identify a configuration of UAV/UAM zone ID condition information. For example, the UE may determine whether the existing zone identifier should be calculated or a new zone identifier should be calculated in step 603. The operation of step 603 may be performed based on at least one or a combination of the conditions in [Table 6].

In step 604, the UE may determine whether the UAV/UAM zone ID condition is satisfied. For example, when it is determined that the condition for calculating the new zone identifier is satisfied in step 604, the UE may proceed to step 605 and calculate the new zone identifier. In step 605, the UE may calculate the zone identifier by using the zone configuration information and the zone identifier equation in [Table 3] and [Table 5]. When the UE cannot calculate the new zone identifier and the condition for calculating the exiting zone identifier is satisfied according to the determination of step 604, the UE may proceed to step 606 and calculate the existing zone identifier. In step 606, the UE may calculate the zone identifier by using the zone configuration information and the zone identifier equation in [Table 2] and [Table 4]. After step 605 or 606, the UE may perform an operation of selecting a transmission resource pool corresponding to the UAV service message or the UAM service message mapped to the derived zone identifier, allocating transmission resources in the selected transmission resource pool, and transmitting the UAV service message or the UAM service message.

According to an embodiment of the disclosure, when the UE selects a transmission resource pool configured for U2X communication for the UAM service message or the UAV service message, based on zone configuration information and its own location information, the UE operation is as shown in [Table 7].

**[Table 7]**

| |
|---|
| When there is zone configuration information for a frequency designated to transmit a UAV service message or a UAM service message through U2X communication, the UE may perform a zone-based transmission resource pool selection operation, based on zone configuration information. |
| The UE may select a transmission resource pool corresponding to its own U2X communication synchronization reference source and its own zone identifier. |
| For a frequency used for U2X sidelink communication for UAV/UAM service, if zoneConfig is not ignored, the UE configured by upper layers for U2X sidelink communication for UAV/UAM service shall only use the pool which corresponds to geographical coordinates of the UE, if zoneConfig is included in SystemInformationBlockType for UAV/UAM service of the serving cell (RRC_IDLE)/ PCell (RRC_CONNECTED) or in RRCConnectionReconfiguration for the concerned frequency, and the UE is configured to use resource pools provided by RRC signalling for the concerned frequency; or if zoneConfig is included in SL-Preconfiguration for UAV/UAM service for the concerned frequency, and the UE is configured to use resource pools in SL-Preconfiguration for UAV/UAM service for the frequency. The UE shall only use the pool which is associated with the synchronization reference source selected. |
| UAV/UAM UE selects a pool of resources which includes a zoneID equals to Zone_id calculated according to the formulae in [Table 4] or [Table 5] and indicated by the resource pool configuration and zone configuration in [Table 2] or [Table 3]. |
| The UAV UE or the UAM UE may calculate a zone ID, based on the latest geographical coordinate. When there is the zone configuration to select zone-based resources but there is no geographical coordinate information of the UE, a transmission resource pool selection method may be determined by the UE. |

According to an embodiment of the disclosure, the UE may transmit UE capability signaling to the base station and inform that a zone-based transmission resource pool selection function is supported when U2X communication is performed. The UE capability signaling may include information indicating that overall U2X communication can be performed by the UE or information indicating that the zone-based transmission resource pool selection function can be performed by the UE by including the zone-based transmission resource pool selection function. When the UE performs U2X communication, the base station may provide a zone configuration for allowing the corresponding UE to use the zone-based transmission resource pool of FIG 3 and FIG 4, based on capability information for supporting the zone-based transmission resource pool selection function and indicate the use of the zone-based transmission resource pool of FIG. 3 or the zone-based transmission resource pool of FIG. 4 to the UE.

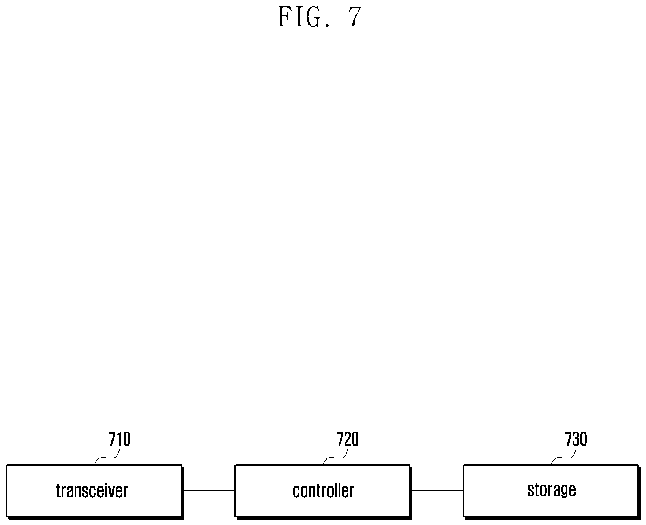

Meanwhile, FIG. 7 is a diagram illustrating a structure of the UE according to an embodiment of the disclosure.

Referring to FIG. 7, the UE may include a transceiver 710, a controller 720, and a storage 730. In the disclosure, the controller may be defined as a circuit, an application-specific integrated circuit, or at least one processor.

The transceiver 710 may transmit and receive a signal to and from another network entity as well as another UE. The transceiver 710 may transmit and receive a UAV control message or a UAM control message including required control information through, for example, a direct communication interface between UEs.

The controller 720 may control the overall operation of the UE according to an embodiment proposed in the disclosure. For example, the controller 720 may control a signal flow between blocks to perform the operation according to the above-described flowchart. Specifically, the controller 720 may control the performance of direct communication between UEs according to an embodiment of the disclosure. Alternatively, the controller 720 may identify a zone identifier, based on zone configuration information and select a transmission resource pool for transmitting a UAV/UAM service message, based on the zone identifier.

The storage 730 may store at least one piece of information transmitted/received through the transceiver 710 and information generated through the controller 720. For example, the storage 730 may store the identified zone identifier, based on zone configuration information.

Meanwhile, according to an embodiment of the disclosure, a method performed by a UE in a wireless communication system may include a step of determining whether UAV (drone) service message or urban air mobility (UAM) service message transmission resources are needed, a step of determining whether a zone configuration for transmission resource pool selection can be used, a step of calculating its own zone identification information, based on a zone configuration, a step of selecting a zone-based transmission resource pool, based on the zone identification information, a step of allocating transmission resources in the selected transmission resource pool, and a step of transmitting a service message by using the allocated transmission resources.

Methods according to claims or embodiments stated in specifications of the disclosure may be implemented in hardware, software, or a combination of hardware and software.

In the implementation of software, a computer-readable storage medium for storing one or more programs (software modules) may be provided. The one or more programs stored in the computer-readable storage medium may be configured for execution by one or more processors within the electronic device. The one or more programs may include instructions for allowing the electronic device to perform methods according to the claims of the disclosure or the embodiments stated in the specification.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices or magnetic cassettes. Alternatively, the programs may be stored in a memory configured by a combination of some or all of the listed components. Further, a plurality of configuration memories may be included.

In addition, the programs may be stored in an attachable storage device which may access through communication networks such as the Internet, Intranet, local area network (LAN), wide LAN (WLAN), and storage area network (SAN) or a communication network constituted by a combination thereof. The storage device may access a device performing embodiments of the disclosure through an external port. A separate storage device in a communication network may access the device performing embodiments of the disclosure.

In the detailed embodiments of the disclosure, components included in the disclosure are expressed in a singular or plural form according to the presented detailed embodiment. However, the singular or plural expression is selected to be suitable for context for convenience of description, and the disclosure is not limited to a singular component or plural components. Even components expressed in the plural form may be configured as a singular, and even an component expressed in the singular form may be configured as a plural.

While the present has been shown and described with reference to certain embodiments thereof, it will be understood by those skilled in the art that various changes in form and details may be made therein without departing from the scope of the disclosure. Therefore, the scope of the disclosure should not be defined as being limited to the embodiments, but should be defined by the appended claims and equivalents thereof.

## Claims

1. A method performed by a terminal in a wireless communication system, the method comprising:
identifying first zone configuration information associated with communication performed between terminals, the first zone configuration information comprising at least one of height information or velocity information of at least one zone;
determining a zone identifier corresponding to the terminal, based on the first zone configuration information and location information of the terminal;
identifying transmission resource pool information corresponding to the zone identifier, based on the determined zone identifier; and
allocating transmission resources for transmitting a message associated with the communication performed between the terminals, based on the identified transmission resource pool information.

2. The method of claim 1, wherein the determining of the zone identifier comprises identifying at least one of altitude information of the terminal or velocity information of the terminal, and
wherein the zone identifier is determined based on at least one of the identified altitude information of the terminal or the velocity information of the terminal.

3. The method of claim 1, further comprising:
identifying altitude information of the terminal;
identifying whether the identified altitude information of the terminal is higher than or equal to a preset threshold;
determining the zone identifier, based on at least one of the height information or the velocity information included in the first zone configuration information in case that the altitude information of the terminal is higher than or equal to the threshold; and
determining the zone identifier without consideration of at least one of the height information or the velocity information included in the first zone configuration information in case that the altitude information of the terminal is lower than the threshold.

4. The method of claim 1, further comprising:
receiving second zone configuration information associated with the communication between the terminals, the second zone configuration information comprising length information and width information of at least one zone;
identifying altitude information of the terminal;
identifying whether the identified altitude information of the terminal is higher than or equal to a preset threshold;
determining the zone identifier, based on the first zone configuration information in case that the altitude information of the terminal is higher than or equal to the threshold; and
determining the zone identifier, based on the second zone configuration information in case that the altitude information of the terminal is lower than the threshold.

5. The method of claim 1, wherein the communication performed between the terminals is communication associated with an unmanned aerial vehicle (UAV) or urban air mobility (UAM) service.

6. A method performed by a base station in a wireless communication system, the method comprising:
generating first zone configuration information associated with communication performed between terminals, the first zone configuration information comprising at least one of height information or velocity information of at least one zone; and
transmitting a message comprising the generated first zone configuration information to a terminal supporting the communication performed between the terminals,
wherein the first zone configuration information is used to determine a zone identifier corresponding to the terminal by the terminal.

7. The method of claim 6, further comprising:
generating second zone configuration information associated with the communication between the terminals, the second zone configuration information comprising length information and width information of at least one zone; and
transmitting the second zone configuration information to the terminal,
wherein the zone identifier of the terminal is determined based on one configuration information of the first zone configuration information and the second zone configuration information, based on altitude information of the terminal.

8. A terminal in a wireless communication system, the terminal comprising:
a transceiver; and
a controller configured to perform control to:
identify first zone configuration information associated with communication performed between terminals, the first zone configuration information comprising at least one of height information or velocity information of at least one zone;
determine a zone identifier corresponding to the terminal, based on the first zone configuration information and location information of the terminal;
identify transmission resource pool information corresponding to the zone identifier, based on the determined zone identifier; and
allocate transmission resources for transmitting a message associated with the communication performed between the terminals, based on the identified transmission resource pool information.

9. The terminal of claim 8, wherein the controller is configured to perform control to identify at least one of altitude information of the terminal or velocity information of the terminal and determine the zone identifier, based on at least one of the identified altitude information of the terminal or the identified velocity information of the terminal.

10. The terminal of claim 8, wherein the controller is configured to perform control to:
identify altitude information of the terminal;
identify whether the identified altitude information of the terminal is higher than or equal to a preset threshold;
determine the zone identifier, based on at least one of the height information or the velocity information included in the first zone configuration information in case that the altitude information of the terminal is higher than or equal to the threshold; and
determine the zone identifier without consideration of at least one of the height information or the velocity information included in the first zone configuration information in case that the altitude information of the terminal is lower than the threshold.

11. The terminal of claim 8, wherein the controller is configured to perform control to:
receive second zone configuration information associated with the communication between the terminals through the transceiver, the second zone configuration information comprising length information and width information of at least one zone;
identify altitude information of the terminal;
identify whether the identified altitude information of the terminal is higher than or equal to a preset threshold;
determine the zone identifier, based on the first zone configuration information in case that the altitude information of the terminal is higher than or equal to the threshold; and
determine the zone identifier, based on the second zone configuration information in case that the altitude information of the terminal is lower than the threshold.

12. The terminal of claim 8, wherein the communication performed between the terminals is communication associated with an unmanned aerial vehicle (UAV) or urban air mobility (UAM) service.

13. A base station in a wireless communication system, the base station comprising:
a transceiver; and
a controller configured to perform control to:
generate first zone configuration information associated with communication performed between terminals, the first zone configuration information comprising at least one of height information or velocity information of at least one zone; and
transmit, through the transceiver, a message comprising the generated first zone configuration information to a terminal supporting the communication performed between the terminals,
wherein the first zone configuration information is used to determine a zone identifier corresponding to the terminal by the terminal.

14. The base station of claim 13, wherein the controller is configured to:
perform control to generate second zone configuration information associated with the communication between the terminals, the second zone configuration information comprising length information and width information of at least one zone; and
perform control to transmit the second zone configuration information to the terminal through the transceiver, and
wherein the zone identifier of the terminal is determined based on one configuration information of the first zone configuration information and the second zone configuration information, based on altitude information of the terminal.
